# EUROPEAN PATENT APPLICATION

(11) **EP 4 770 255 A1**
(43) Date of publication of application: **01.07.2026**
(21) Application number: 23949412.3
(22) Date of filing: 23.08.2023
(51) Int. Cl.: H04W 74/08, H04B 17/382

(54) **COMMUNICATION METHOD, ACCESS POINT DEVICE, STATION DEVICE, AND COMMUNICATION DEVICE**

(71) Applicant: Beijing Xiaomi Mobile Software Co., Ltd., Beijing 100085 (CN)
(72) Inventor: DONG, Xiandong, Beijing 100085 (CN)
(74) Representative: Stöckeler, Ferdinand
(86) International application number: PCT/CN2023/114493
(87) International publication number: WO 2025/039225

(57) **Abstract**

The embodiments of the present disclosure relate to a communication method, an access point device, a station device, and a communication device. The communication method comprises: an access point device determining a first radio frame on auxiliary channels, wherein the first radio frame is used for requesting that a station device receives data on the auxiliary channels or feeds cache state information back on the auxiliary channels; and at the moment of arrival of an interception period, sending the first radio frame on the auxiliary channels, wherein at each moment of arrival of the interception period, the station device monitors the auxiliary channels and receives the first radio frame on the auxiliary channels, such that a situation whereby the station device cannot receive the first radio frame is avoided, and communication in the auxiliary channels is thus realized, thereby improving the throughput of a communication system, and realizing the utilization maximization of channel resources.

## Description

### TECHNICAL FIELD

The present disclosure relates to the field of communication technology, and specifically to a communication method, an access point, a station and a communication device.

### BACKGROUND

Currently, Wi-Fi technology researches contents such as ultra high reliability (UHR), with the vision of improving reliability of a wireless local area network (WLAN) connection, reducing latency, improving manageability, increasing throughput at different signal-to-noise ratio (SNR) levels, and reducing device-level power consumption.

In the UHR, in order to fully utilize channel resources and support a WLAN device to communicate on a secondary channel, it is necessary to further improve a communication mechanism of the WLAN device on the secondary channel to meet transmission requirements of the UHR.

### SUMMARY

Embodiments of the present disclosure provide a communication method, an access point, a station and a communication device, to further improve a communication mechanism of a WLAN device on a secondary channel.

According to a first aspect of the embodiments of the present disclosure, a communication method is provided, including:
determining, by an access point, a first wireless frame on a secondary channel, in which the first wireless frame is used to request a station to receive data on the secondary channel or to feed back buffer status information on the secondary channel; and
sending the first wireless frame on the secondary channel at an arriving time of a listening period, in which the listening period is pre-negotiated with the station.

According to a second aspect of the embodiments of the present disclosure, a communication method is provided, including:
receiving, by a station, a first wireless frame on a secondary channel at an arriving time of a listening period;
in which the first wireless frame is used to request the station to receive data on the secondary channel or to feed back buffer status information on the secondary channel;
the listening period is pre-negotiated with the station.

According to a third aspect of the embodiments of the present disclosure, a communication method is provided, including:
determining, by a station, a second wireless frame on a secondary channel, in which the second wireless frame is used to request an access point to receive data on the secondary channel; and
sending the second wireless frame on the secondary channel at an arriving time of a listening period, in which the listening period is pre-negotiated with the access point.

According to a fourth aspect of the embodiments of the present disclosure, a communication method is provided, including:
receiving, by an access point, a second wireless frame on a secondary channel at an arriving time of a listening period;
in which the second wireless frame is used to request the access point to receive data on the secondary channel;
the listening period is pre-negotiated with the station.

According to a fifth aspect of the embodiments of the present disclosure, an access point is provided, including:
a first determining module, configured to determine a first wireless frame on a secondary channel, wherein the first wireless frame is used to request a station to receive data on the secondary channel or to feed back buffer status information on the secondary channel; and
a first sending module, configured to send the first wireless frame on the secondary channel at an arriving time of a listening period, wherein the listening period is pre-negotiated with the station.

According to a sixth aspect of the embodiments of the present disclosure, a station is provided, including:
a first receiving module, configured to receive a first wireless frame on a secondary channel at an arriving time of a listening period;
wherein the first wireless frame is used to request the station to receive data on the secondary channel or to feed back buffer status information on the secondary channel;
the listening period is pre-negotiated with the station.

According to a seventh aspect of the embodiments of the present disclosure, a station is provided, including:
a second determining module, configured to determine a second wireless frame on a secondary channel, wherein the second wireless frame is used to request an access point to receive data on the secondary channel; and
a second sending module, configured to send the second wireless frame on the secondary channel at an arriving time of a listening period, wherein the listening period is pre-negotiated with the access point.

According to an eighth aspect of the embodiments of the present disclosure, an access point is provided, including:
a second receiving module, configured to receive a second wireless frame on a secondary channel at an arriving time of a listening period;
wherein the second wireless frame is used to request the access point to receive data on the secondary channel;
the listening period is pre-negotiated with the station.

According to a ninth aspect of the embodiments of the present disclosure, an access point is provided, including:
one or more processors;
wherein the access point is configured to perform the communication method of embodiments of the present disclosure.

According to a tenth aspect of the embodiments of the present disclosure, a station is provided, including:
one or more processors;
wherein the station is configured to perform the communication method of embodiments of the present disclosure.

According to an eleventh aspect of the embodiments of the present disclosure, a communication device is provided, including:
one or more processors;
wherein the communication device is configured to perform the communication method of embodiments of the present disclosure.

Embodiments of the present disclosure further provide a communication system, including: an access point and a station. The access point is configured to perform the communication method of embodiments of the present disclosure, and the station is configured to perform the communication method of embodiments of the present disclosure.

Embodiments of the present disclosure further provide a storage medium having instructions stored thereon. When the instructions are executed on a communication device, the communication device is configured to perform the communication method of embodiments of the present disclosure, or the communication method of embodiments of the present disclosure.

In the embodiments of the present disclosure, when the access point senses that a primary channel is busy, it switches to a secondary channel to determine a first wireless frame, and sends the first wireless frame on the secondary channel at an arriving time of a listening period, to request a station to send a data frame or buffer information through the first wireless frame. The listening period is a period for listening to the secondary channel that is pre-negotiated with the station, and the listening period may be a period for the station to listen to the secondary channel. At the time when each listening period arrives, the station will listen to the secondary channel and receive the first wireless frame on the secondary channel to avoid a situation where the station cannot receive the first wireless frame and further realize communication on the secondary channel, so as to improve throughput of a communication system and maximize utilization of channel resources.

Additional aspects and advantages of the embodiments of the present disclosure will be partially given in the description below, which will become apparent from the description below, or will be learned through the practice of the present disclosure.

### BRIEF DESCRIPTION OF THE DRAWINGS

In order to more clearly illustrate the technical solutions in the embodiments of the present disclosure, the drawings required for describing the embodiments are introduced below. The following drawings are only some embodiments of the present disclosure and do not impose specific limitations on the protection scope of the present disclosure.
FIG. 1 is a schematic diagram of an example according to an embodiment of the present disclosure.
FIG. 2 is a schematic diagram of a communication system according to an embodiment of the present disclosure.
FIG. 3 is an interactive schematic diagram of a method according to an embodiment of the present disclosure.
FIG. 4 is an interactive schematic diagram of a method according to an embodiment of the present disclosure.
FIG. 5 is a flowchart of a communication method according to an embodiment of the present disclosure.
FIG. 6 is a flowchart of a communication method according to an embodiment of the present disclosure.
FIG. 7 is a flowchart of a communication method according to an embodiment of the present disclosure.
FIG. 8 is a flowchart of a communication method according to an embodiment of the present disclosure.
FIG. 9 is a block diagram of an access point according to an embodiment of the present disclosure.
FIG. 10 is a block diagram of a station according to an embodiment of the present disclosure.
FIG. 11 is a block diagram of a station according to an embodiment of the present disclosure.
FIG. 12 is a block diagram of an access point according to an embodiment of the present disclosure.
FIG. 13 is a block diagram of a terminal according to an embodiment of the present disclosure.
FIG. 14 is a block diagram of a chip according to an embodiment of the present disclosure.

### DETAILED DESCRIPTION

Embodiments of the present disclosure provide a communication method, an access point, a station and a communication device.

According to a first aspect of the embodiments of the present disclosure, a communication method is provided, including:
determining, by an access point, a first wireless frame on a secondary channel, in which the first wireless frame is used to request a station to receive data on the secondary channel or to feed back buffer status information on the secondary channel; and
sending the first wireless frame on the secondary channel at an arriving time of a listening period, in which the listening period is pre-negotiated with the station.

In the above embodiment, at the time when each listening period arrives, the access point sends the first wireless frame on the secondary channel, and the station will listen to the secondary channel and receive the first wireless frame on the secondary channel, to avoid a situation where the station cannot receive the first wireless frame and further realize communication on the secondary channel, so as to improve throughput of a communication system and maximize utilization of channel resources.

In combination with some embodiments of the first aspect, in some embodiments, sending the first wireless frame on the secondary channel at the arriving time of the listening period includes:
sending the first wireless frame simultaneously on each secondary channel at the arriving time of the listening period, in which a sensing mode of the secondary channel includes a simultaneous sensing mode;
   or
sending the first wireless frame on each secondary channel respectively at an arriving time of a listening period of each secondary channel, in which a sensing mode of the secondary channel includes a time-division sensing mode.

In the above embodiment, different sending operations are performed for time-division sensing and simultaneous sensing, respectively, to avoid a situation where the station cannot receive the first wireless frame.

In combination with some embodiments of the first aspect, in some embodiments, the first wireless frame includes a request to send (RTS) frame or a buffer status report poll (BSRP) frame.

In the above embodiment, the first wireless frame is used to request the station to receive data on the secondary channel or feed back buffer status information on the secondary channel.

In combination with some embodiments of the first aspect, in some embodiments, a duration of the first wireless frame is less than or equal to a preset duration of a network allocation vector (NAV) of a primary channel.

In the above embodiment, communication interruption or other situations on the secondary channel due to that the communication on the secondary channel is not yet completed but the NAV of the primary channel is completed and the station or the access point re-accesses the primary channel may be avoided.

In combination with some embodiments of the first aspect, in some embodiments, the method further includes:
during or after an initial association procedure, negotiating listening period information of the secondary channel, in which the listening period information uses a time synchronization function (TSF) parameter of a primary channel as a time reference.

In the above embodiment, a communication process on the secondary channel is improved by negotiating the listening period.

In combination with some embodiments of the first aspect, in some embodiments, a sensing mode of the secondary channel comprises a simultaneous sensing mode, and each secondary channel has the same listening period;
a sensing mode of the secondary channel comprises a time-division sensing mode, and different secondary channels have different listening periods;
   or
a sensing mode of the secondary channel comprises a time-division sensing mode, and at least two adjacent sensing periods in a listening order have the same interval.

In the above embodiment, a communication process on the secondary channel is improved by negotiating time information, interval information, etc. of the listening period.

According to a second aspect of the embodiments of the present disclosure, a communication method is provided, including:
receiving, by a station, a first wireless frame on a secondary channel at an arriving time of a listening period;
in which the first wireless frame is used to request the station to receive data on the secondary channel or to feed back buffer status information on the secondary channel;
the listening period is pre-negotiated with the station.

In combination with some embodiments of the second aspect, in some embodiments, receiving the first wireless frame on the secondary channel at the arriving time of the listening period includes:
receiving the first wireless frame simultaneously on each secondary channel at the arriving time of the listening period, in which a sensing mode of the secondary channel includes a simultaneous sensing mode;
   or
receiving the first wireless frame on each secondary channel respectively at an arriving time of a listening period of each secondary channel, in which a sensing mode of the secondary channel includes a time-division sensing mode.

In combination with some embodiments of the second aspect, in some embodiments, the first wireless frame includes a request to send (RTS) frame or a buffer status report poll (BSRP) frame.

In combination with some embodiments of the second aspect, in some embodiments, a duration of the first wireless frame is less than or equal to a preset duration of a network allocation vector (NAV) of a primary channel.

In combination with some embodiments of the second aspect, in some embodiments, the method further includes:
during or after an initial association procedure, negotiating listening period information of the secondary channel, in which the listening period information uses a time synchronization function (TSF) parameter of a primary channel as a time reference.

In combination with some embodiments of the second aspect, in some embodiments, a sensing mode of the secondary channel comprises a simultaneous sensing mode, and each secondary channel has the same listening period;
a sensing mode of the secondary channel comprises a time-division sensing mode, and different secondary channels have different listening periods;
   or
a sensing mode of the secondary channel comprises a time-division sensing mode, and at least two adjacent sensing periods in a listening order have the same interval.

According to a third aspect of the embodiments of the present disclosure, a communication method is provided, including:
determining, by a station, a second wireless frame on a secondary channel, in which the second wireless frame is used to request an access point to receive data on the secondary channel; and
sending the second wireless frame on the secondary channel at an arriving time of a listening period, in which the listening period is pre-negotiated with the access point.

In combination with some embodiments of the third aspect, in some embodiments, sending the second wireless frame on the secondary channel at the arriving time of the listening period includes:
sending the second wireless frame simultaneously on each secondary channel at the arriving time of the listening period, in which a sensing mode of the secondary channel includes a simultaneous sensing mode;
   or
sending the second wireless frame on each secondary channel respectively at an arriving time of a listening period of each secondary channel, in which a sensing mode of the secondary channel includes a time-division sensing mode.

In combination with some embodiments of the third aspect, in some embodiments, the second wireless frame includes a request to send (RTS) frame.

In combination with some embodiments of the third aspect, in some embodiments, a duration of the second wireless frame is less than or equal to a preset duration of a network allocation vector (NAV) of a primary channel.

In combination with some embodiments of the third aspect, in some embodiments, the method further includes: during or after an initial association procedure, negotiating listening period information of the secondary channel, in which the listening period information uses a time synchronization function (TSF) parameter of a primary channel as a time reference.

In combination with some embodiments of the third aspect, in some embodiments, a sensing mode of the secondary channel comprises a simultaneous sensing mode, and each secondary channel has the same listening period;
a sensing mode of the secondary channel comprises a time-division sensing mode, and different secondary channels have different listening periods;
   or
a sensing mode of the secondary channel comprises a time-division sensing mode, and at least two adjacent sensing periods in a listening order have the same interval.

According to a fourth aspect of the embodiments of the present disclosure, a communication method is provided, including:
receiving, by an access point, a second wireless frame on a secondary channel at an arriving time of a listening period;
in which the second wireless frame is used to request the access point to receive data on the secondary channel;
the listening period is pre-negotiated with the station.

In combination with some embodiments of the fourth aspect, in some embodiments, receiving the first wireless frame on the secondary channel at the arriving time of the listening period includes:
receiving the second wireless frame simultaneously on each secondary channel at the arriving time of the listening period, in which a sensing mode of the secondary channel includes a simultaneous sensing mode;
   or
receiving the second wireless frame on each secondary channel respectively at an arriving time of a listening period of each secondary channel, in which a sensing mode of the secondary channel includes a time-division sensing mode.

In combination with some embodiments of the fourth aspect, in some embodiments, the second wireless frame includes a request to send (RTS) frame.

In combination with some embodiments of the fourth aspect, in some embodiments, a duration of the second wireless frame is less than or equal to a preset duration of a network allocation vector (NAV) of a primary channel.

In combination with some embodiments of the fourth aspect, in some embodiments, the method further includes: during or after an initial association procedure, negotiating listening period information of the secondary channel, in which the listening period information uses a time synchronization function (TSF) parameter of a primary channel as a time reference.

In combination with some embodiments of the fourth aspect, in some embodiments, a sensing mode of the secondary channel comprises a simultaneous sensing mode, and each secondary channel has the same listening period;
a sensing mode of the secondary channel comprises a time-division sensing mode, and different secondary channels have different listening periods;
   or
a sensing mode of the secondary channel comprises a time-division sensing mode, and at least two adjacent sensing periods in a listening order have the same interval.

According to a fifth aspect of the embodiments of the present disclosure, an access point is provided, including at least one of a determining module or a sending module. The access point is configured to perform alternative implementations of the first aspect or the second aspect.

According to a sixth aspect of the embodiments of the present disclosure, a station is provided, including a first receiving module. The station is configured to perform alternative implementations of the second aspect or the fourth aspect.

According to a seventh aspect of the embodiments of the present disclosure, an access point is provided, including:
one or more processors;
in which the access point is configured to perform alternative implementations of the first aspect or the third aspect.

According to an eighth aspect of the embodiments of the present disclosure, a station is provided, including:
one or more processors;
in which the station is configured to perform alternative implementations of the second aspect or the fourth aspect.

According to a ninth aspect of the embodiments of the present disclosure, a communication system is provided, including: an access point and a station. The access point is configured to perform alternative implementations of the first aspect or the second aspect, and the station is configured to perform alternative implementations of the third aspect or the fourth aspect.

According to a tenth aspect of the embodiments of the present disclosure, a storage medium having instructions stored thereon is provided. When the instructions are executed on a communication device, the communication device is configured to perform the method described in alternative implementations of the first aspect, the second aspect, the third aspect or the fourth aspect.

According to an eleventh aspect of the embodiments of the present disclosure, a program product is provided. When the program product is executed on a communication device, the communication device is caused to perform the method described in alternative implementations of the first aspect, the second aspect, the third aspect or the fourth aspect.

According to a twelfth aspect of the embodiments of the present disclosure, a computer program is provided. When the computer program is running on a computer, the computer is caused to perform the method described in alternative implementations of the first aspect, the second aspect, the third aspect or the fourth aspect.

According to a thirteenth aspect of the embodiments of the present disclosure, a chip or chip system is provided. The chip or chip system includes a processing circuit configured to execute the method described in alternative implementations of the first aspect, the second aspect, the third aspect or the fourth aspect.

It can be understood that the above-mentioned access point, the station, the communication system, the storage medium, the program product, the computer program, and the chip or chip system are all used to execute the method proposed in the embodiments of the present disclosure. Therefore, for the beneficial effects that can be achieved, reference may be made to the beneficial effects in the corresponding method, which will not be repeated here.

The embodiments of the present disclosure propose a communication method, an access point, a station and a communication device. In some embodiments, the terms such as communication method, signal sending method, wireless frame sending method, etc. can be replaced with each other, and the terms such as information processing system, communication system, etc. can be replaced with each other.

The embodiments of the present disclosure are not exhaustive, but are only illustrative, and are not intended to be a specific limitation on the protection scope of the present disclosure. In the absence of contradiction, each step in a certain embodiment can be implemented as an independent embodiment, and respective steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, respective embodiments can be arbitrarily combined, for example, some or all steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referred to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, "plurality" refers to two or more.

In some embodiments, the terms "at least one of", "one or more", "a plurality of", "multiple" etc. may be used interchangeably.

In some embodiments, descriptions such as "at least one of A, B...", "A and/or B...", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, descriptions such as "A or B...", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and can be one or more. Taking the "first apparatus" as an example, the number of "apparatuses" can be one or more. In addition, the objects modified by different prefixes may be the same or different. For example, if the descriptive object is "apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, the terms such as "in response to...", "in response to determining...", "in the case of...", "at the time of...", "when...", "if...", "provide that...", etc. can be used interchangeably.

In some embodiments, the terms such as "greater than", "less than or equal to", "not less than", "more than", "more than or equal to", "not less than", "higher than", "higher than or equal to", "not lower than", and "above" can be replaced with each other, and the terms such as "less than", "less than or equal to", "not greater than", "less than", "less than or equal to", "no more than", "lower than", "lower than or equal to", "not higher than", and "below" can be replaced with each other.

In some embodiments, the apparatus and the device can be interpreted as physical or virtual, and their names are not limited to the names described in the embodiments, which may be understood as "equipment", "device", "circuit", "network element", "node", "function", "unit", "section", "system", "network", "chip", "chip system", "entity", and "subject" in some cases.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

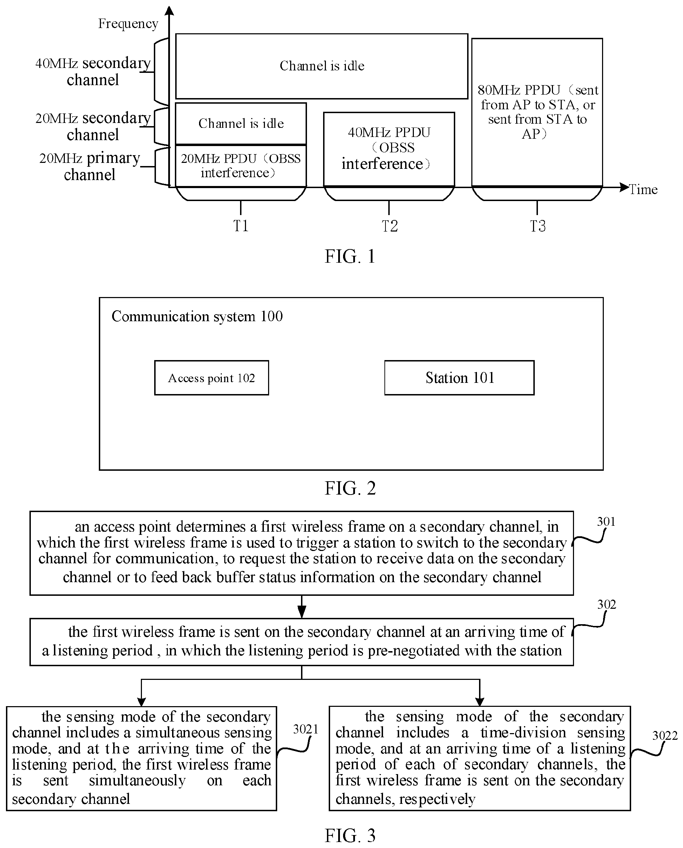

FIG. 1 is a schematic diagram of a communication method according to an embodiment of the present disclosure.

As shown in FIG. 1, in the WLAN, channels are usually classified into a primary channel and a secondary channel (or called an auxiliary channel, a non-primary channel). The primary channel is, for example, the primary 20 MHz channel in FIG. 1, and the secondary channel may include one or more sub-channels, for example, a 20 MHz secondary channel and a 40 MHz secondary channel in FIG. 1.

In a random competition procedure on a channel, if the primary channel is in an OBSS busy state (OBSS interference), such as in a T1 time period and a T2 time period as shown in the figure, for example, it is occupied by another device in the same OBSS as the WLAN, and the other device sends a physical layer protocol data unit (PPDU) on the primary channel, then the primary channel is in the OBSS busy state. If the primary channel is in the OBSS busy state, in order to make full use of channel resources, the primary channel may be switched to the secondary channel for communication to improve throughput of the communication system and maximize utilization of the channel resources. For example, it is switched to the 20MHz secondary channel for communication in the T1 time period, or switched to the 40MHz secondary channel for communication in the T2 time period.

If the primary channel is in an idle state, such as in a T3 time period as shown in the figure, an AP and a STA may send data or other information to each other.

FIG. 2 is a schematic diagram of an architecture of a communication system according to an embodiment of the present disclosure.

As shown in FIG. 2, the communication system 100 includes a station (STA) 101 and an access point (AP) 102.

In some embodiments, the station 101 includes, for example, a wireless communication chip, a wireless sensor, or a wireless communication terminal that supports a WiFi communication function. Optionally, the wireless communication terminal is, for example, at least one of a mobile phone, a wearable device, an Internet of Things device that supports the WiFi communication function, a car with the WiFi communication function, a smart car, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home, but the present disclosure is not limited thereto.

Specifically, the station 101 may be a terminal device or a network device with a wireless fidelity (WiFi) chip. Optionally, the station 101 may support multiple WLAN standards such as 802.11ax, 802.11be, 802.11ac, 802.11n, 802.11g, 802.11b, 802.11a, 802.11bf, 802.11bn, and support the next generation 802.11 protocol, but the present disclosure is not limited thereto.

In some embodiments, the access point 102 may be an access point for a mobile terminal to enter a wired network. The AP is equivalent to a bridge connecting a wired network and a wireless network, and its main function is to connect various wireless network clients together and then connect the wireless network to the Ethernet. Specifically, the AP may be a terminal device or a network device with a wireless fidelity chip. Optionally, the AP can support multiple WLAN standards such as 802.11ax, 802.11be, 802.11ac, 802.11n, 802.11g, 802.11b and 802.11a, 802.11bf, 802.11bn, and support the next generation 802.11 protocol, but the present disclosure is not limited thereto.

Optionally, in an embodiment of the present disclosure, the AP and the STA may be devices supporting multiple connections, for example, they may be respectively represented as an access point multi-link device (AP MLD) and a non-access point multi-link device (Non-AP MLD). The AP MLD may represent an access point supporting a multi-connection communication function, and the non-AP MLD may represent a station supporting the multi-connection communication function.

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or some entities shown in FIG. 2, but are not limited thereto. The entities shown in FIG. 2 are examples, and the communication system may include all or part of the entities in FIG. 2, or may include other entities other than those shown in FIG. 2, and the number and form of the entities are arbitrary, each entity may be physical or virtual, and the connection relationships between the entities are examples, and the entities may be connected or disconnected, and the connection may be in any manner, which may be a direct connection or an indirect connection, and may be a wired connection or a wireless connection.

Various embodiments of the present disclosure may be applied to a wireless local area network (WLAN), such as a local area network using the 802.11 series of protocols. In the WLAN, a basic service set (BSS) is a basic component of the WLAN. A BSS network is composed of stations with a certain association within a specific coverage area. One case of the association is that stations communicate directly with each other in an ad hoc network, which is called an independent BSS (IBSS). Another more common case is that there is only one central STA in the BSS network that is dedicated to managing the BSS, which is called an access point, and all other STAs in the network are associated with it. Other stations in the BSS network that are not the central STA are called terminals, also called non-AP STAs, and terminals and non-AP STAs are collectively referred to as STAs. When describing STAs, there is no need to distinguish between APs and non-AP STAs. In the same BSS network, due to distance, transmission power, etc., a STA cannot detect another STA that is far away from it, and the two STAs are hidden nodes for each other.

FIG. 3 is a schematic diagram of a communication method according to an embodiment of the present disclosure. As shown in FIG. 3, the method includes the following.

At step 301, an access point determines a first wireless frame on a secondary channel, in which the first wireless frame is used to request a station to receive data on the secondary channel or to feed back buffer status information on the secondary channel.

In the WLAN, channels are usually classified into a primary channel and a secondary channel (or called an auxiliary channel, a non-primary channel). The secondary channel may include one or more sub-channels. For example, if the basic bandwidth unit is 20MHz, when the channel bandwidth is 20MHz, there is only one primary channel with a bandwidth of 20MHz; when the channel bandwidth is greater than 20MHz, a channel with a bandwidth of 20MHz is considered as the primary channel, and the remaining one or more 20MHz channels are secondary channels. The primary 20MHz channel is a common channel of operation for stations that are members of the basic service set. Stations in the BSS may access the channel through a random competition procedure on the primary 20MHz channel to obtain channel resources.

In the random competition procedure on the channel, if the primary channel is in the OBSS (overlapping basic service set) busy state, for example, it is occupied by another device in the same OBSS as the access point 102, and the other device sends a physical layer protocol data unit (PPDU) on the primary channel, then the primary channel is in the OBSS busy state. If the primary channel is in the OBSS busy state, in order to make full use of channel resources, it may be switched to the secondary channel to communicate with the station 101, the station 101 is scheduled to the secondary channel, and data is sent and received with the station 101, so as to improve throughput of the communication system and maximize utilization of the channel resources.

In this embodiments of the present disclosure, the access point 102 senses whether the primary channel is busy. Usually, each station on the network needs to listen to whether there is other data being transmitted on the channel before sending data, for example, through an energy detection (ED) mechanism at a physical layer and a network allocation vector (NAV) setting mechanism at a MAC layer. When the access point 102 senses that the primary channel is busy, it switches to the secondary channel to determine and send the first wireless frame, and the first wireless frame is used to request the station to send a data frame or buffer information.

Optionally, the first wireless frame may include a request to send (RTS) frame or a buffer status report poll (BSRP) control frame, and the first wireless frame is used to request the station to receive data on the secondary channel or to feedback buffer status information on the secondary channel.

At step 302, the first wireless frame is sent on the secondary channel at an arriving time of a listening period, in which the listening period is pre-negotiated with the station.

When the access point 102 sends an RTS frame or a BSRP control frame on the secondary channel, the station 101 may not be able to receive the first wireless frame. For example, due to existence of hidden nodes, other hidden nodes communicate with the station 101, which interferes with the station 101's sensing of the busy state of the primary channel. Therefore, when the access point 102 senses that the primary channel is busy and switches to the secondary channel to send the first wireless frame, the station 101 may not be able to sense that the primary channel is busy, and the station 101 will not switch to the secondary channel, but will wait on the primary channel for the access point 102 to send the first wireless frame, resulting in unnecessary device power consumption, causing an increase in data transmission delay, and not meeting the delay requirement.

In this embodiments of the present disclosure, when the access point 102 senses that the primary channel is busy, it switches to the secondary channel to determine the first wireless frame, and sends the first wireless frame on the secondary channel at the time when the listening period arrives, and the first wireless frame is used to request the station to send a data frame or buffer information. The listening period is a period for listening to the secondary channel that is pre-negotiated with the station 101, and the listening period may be a period for the station 101 to listen to the secondary channel. At the time when each listening period arrives, the station 101 will listen to the secondary channel and receive the first wireless frame on the secondary channel to avoid a situation where the station 101 cannot receive the first wireless frame and further realize communication on the secondary channel, so as to improve the throughput of the communication system and maximize the utilization of channel resources.

It can be understood that the arriving time of each listening period may be a starting time of each listening period, such as a period before the start of a new listening period, such as the first N milliseconds or microseconds.

In step 302, step 3021 or step 3022 is executed respectively according to a sensing mode of the secondary channel.

At step 3021, the sensing mode of the secondary channel includes a simultaneous sensing mode, and at the arriving time of the listening period, the first wireless frame is sent simultaneously on each secondary channel.

The simultaneous sensing mode means that the station supports sensing of at least two secondary channels simultaneously.

If at least two secondary channels support the simultaneous sensing mode, the access point 102 may simultaneously send the first wireless frame on each secondary channel that supports the simultaneous sensing mode.

At step 3022, the sensing mode of the secondary channel includes a time-division sensing mode, and at an arriving time of the listening period of each of secondary channels, the first wireless frame is sent on the secondary channels, respectively.

The time-division sensing mode means that the station supports sensing of secondary channels respectively. In this way, the access point 102 may send the first wireless frame respectively at the time when the listening period of each secondary channel arrives; that is, for different secondary channels, at the time when the respective listening periods arrive, the first wireless frame is sent on the secondary channels, respectively.

Optionally, there may be a time offset between the secondary channels. For example, if the station 101 performs a backoff operation on secondary channel 1, there will be a deviation in the sending time on secondary channel 2. In this case, the time of each secondary channel may use a time synchronization function (TSF) parameter between the secondary channel and the primary channel as a time reference.

In some embodiments, the sensing mode of the secondary channel includes a simultaneous sensing mode, and the listening period of each secondary channel is the same;
the sensing mode of the secondary channel includes a time-division sensing mode, and the listening periods of different secondary channels are different;
   or
the sensing mode of the secondary channel includes a time-division sensing mode, and at least two adjacent listening periods in a listening order have the same interval.

The sensing mode of the secondary channel includes the simultaneous sensing mode, and the listening period of each secondary channel is the same, that is, the starting time, the ending time and the duration of each listening period are all the same.

The sensing mode of the secondary channel includes the time-division sensing mode, and the listening periods of different secondary channels are different, so as to distinguish the listening periods of different secondary channels and avoid overlap between the listening periods of different secondary channels.

The sensing mode of the secondary channel includes the time-division sensing mode, the listening order of each secondary channel may be set, and adjacent listening periods may have the same time interval. For example, the listening period of secondary channel 1 is listening period 1, the listening period of secondary channel 2 is listening period 2, and the listening period of secondary channel 3 is listening period 3. The time interval between listening period 1 and listening period 2 is the same as the time interval between listening period 2 and listening period 3.

The time interval between adjacent listening periods may be the time interval between the ending time of a previous listening period and the starting time of a current listening period.

In some embodiments, the duration of the first wireless frame is less than or equal to a preset duration of a network allocation vector (NAV) of a primary channel.

Normally, a communication duration on the secondary channel does not exceed a communication time on the primary channel. Therefore, the duration of the first wireless frame is less than or equal to the preset duration of the NAV of the primary channel, so as to avoid communication interruption or other situations on the secondary channel due to that the communication on the secondary channel has not yet completed but the NAV of the primary channel is completed and the station 101 or the access point 102 re-accesses the primary channel.

In some embodiments, the method further includes:
during or after an initial association procedure, negotiating listening period information of the secondary channel, in which the listening period information uses a time synchronization function (TSF) parameter of the primary channel as a time reference.

During the initial association procedure or after the initial association procedure, for example, negotiation is performed through a third wireless frame. The third wireless frame includes at least one of a beacon frame, a probe response frame, an association response frame or a newly defined wireless frame. For example, during the initial association procedure, the access point 102 and the situation 101 negotiate listening capability information of the access point 102 through at least one of the beacon frame, the probe response frame, or the association response frame; the newly defined wireless frame is a wireless frame sent after the initial association procedure, and after the initial association procedure, the listening period information of the access point 102 is negotiated through the newly defined wireless frame.

The listening period information uses the TSF parameter of the primary channel as the time reference, and the listening period information may be carried in the association response frame, for example, the listening period time finally executed is determined by the association response frame.

The communication method involved in the embodiments of the present disclosure may include at least one of the aforementioned steps and embodiments. For example, step 301 may be implemented as an independent embodiment, step 302 may be implemented as an independent embodiment, step 3021 may be implemented as an independent embodiment, and step 3022 may be implemented as an independent embodiment, a combination of step 301 and step 302 may be implemented as an independent embodiment, a combination of step 301 and step 3021 may be implemented as an independent embodiment, and a combination of step 301 and step 3022 may be implemented as an independent embodiment, but the present disclosure is not limited thereto.

In some embodiments, reference may be made to other alternative implementations described before or after the description corresponding to FIG. 3.

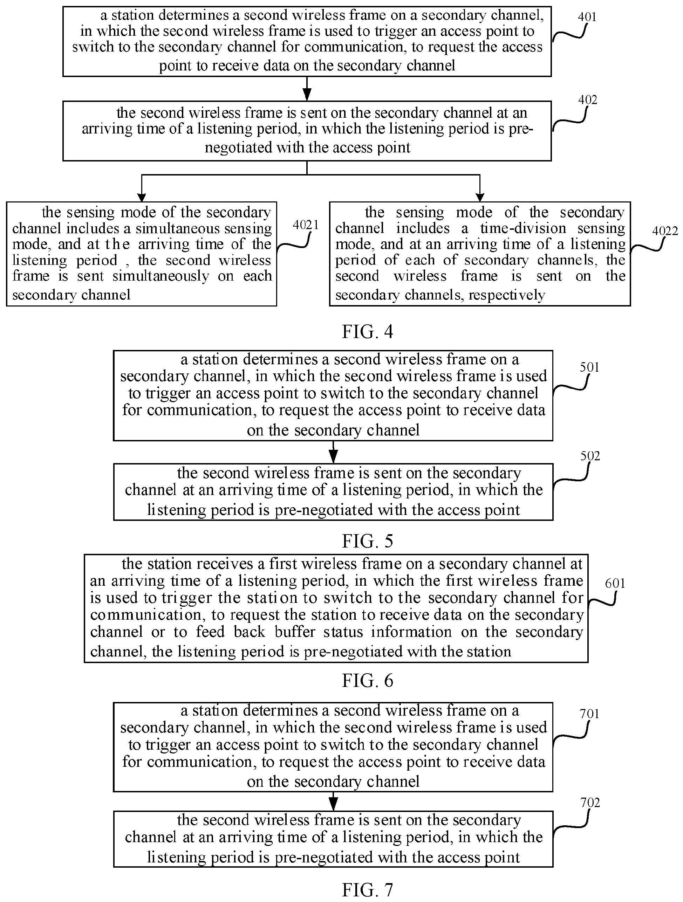

FIG. 4 is a schematic diagram of a communication method according to an embodiment of the present disclosure. As shown in FIG. 4, the method includes the following.

At step 401, a station determines a second wireless frame on a secondary channel, in which the second wireless frame is used to request an access point to receive data on the secondary channel.

In the WLAN, channels are usually classified into a primary channel and an secondary channel (or called a secondary channel, a non-primary channel). The secondary channel may include one or more sub-channels. For example, if the basic bandwidth unit is 20MHz, when the channel bandwidth is 20MHz, there is only one primary channel with a bandwidth of 20MHz; when the channel bandwidth is greater than 20MHz, a channel with a bandwidth of 20MHz is considered as the primary channel, and the remaining one or more 20MHz channels are secondary channels. The primary 20MHz channel is a common channel of operation for stations that are members of the basic service set. Stations in the BSS may perform a random competition procedure on the primary 20MHz channel to preempt channel resources.

In the random competition procedure on the channel, if the primary channel is in an OBSS busy state, for example, it is occupied by another device in the same OBSS as the access point 102, and the other device sends a PPDU on the primary channel, then the primary channel is in the OBSS busy state. If the primary channel is in the OBSS busy state, in order to make full use of channel resources, it may be switched to the secondary channel to communicate with the station 101, the station 101 is scheduled to the secondary channel, and data is sent and received with the station 101, so as to improve throughput of the communication system and maximize utilization of the channel resources.

Usually, each station on the network needs to listen to whether there is other data being transmitted on the channel before sending data, for example, through an energy detection (ED) mechanism. The station 101 determines and sends the second wireless frame on the secondary channel, to request the access point 102 to send a data frame through the second wireless frame.

Optionally, the second wireless frame may include a request to send (RTS) frame.

At step 402, the second wireless frame is sent on the secondary channel at an arriving time of a listening period, in which the listening period is pre-negotiated with the station.

When the access point 102 sends an RTS frame or a BSRP control frame on the secondary channel, the station 101 may not be able to receive the second wireless frame. For example, due to existence of hidden nodes, other hidden nodes communicate with the station 101, which interferes with the station 101's sensing of the busy state of the primary channel. Therefore, when the access point 102 senses that the primary channel is busy and switches to the secondary channel to send the second wireless frame, the station 101 may not be able to sense that the primary channel is busy, and the station 101 will not switch to the secondary channel, but will wait on the primary channel for the access point 102 to send the second wireless frame, resulting in unnecessary device power consumption, causing an increase in data transmission delay, and not meeting the delay requirement.

In this embodiments of the present disclosure, the station 101 sends the second wireless frame on the secondary channel at the time when each listening period arrives, and the second wireless frame is used to request the access point to send a data frame. The listening period is a period for the station 101 to listen to the secondary channel that is pre-negotiated with the station 101. At the time when each listening period arrives, the station 101 will listen to the secondary channel and receive the second wireless frame on the secondary channel to avoid a situation where the station 101 cannot receive the second wireless frame and further realize communication on the secondary channel, so as to improve the throughput of the communication system and maximize the utilization of channel resources.

It can be understood that the arriving time of each listening period may be a starting time of each listening period, such as a period before the start of a new listening period, such as the first N milliseconds.

In step 402, step 4021 or step 4022 is executed respectively according to a sensing mode of the secondary channel.

At step 4021, the sensing mode of the secondary channel includes a simultaneous sensing mode, and at the arriving time of the listening period, the second wireless frame is sent simultaneously on each secondary channel.

The simultaneous sensing mode means that the station 101 supports sensing of at least two secondary channels simultaneously.

If at least two secondary channels support the simultaneous sensing mode, the station 101 may simultaneously send the second wireless frame on each secondary channel that supports the simultaneous sensing mode.

At step 4022, the sensing mode of the secondary channel includes a time-division sensing mode, and at an arriving time of a listening period of each of secondary channels, the second wireless frame is sent on the secondary channels, respectively.

The time-division sensing mode means that the station supports sensing of secondary channels respectively. In this way, the station 101 may send the second wireless frame respectively at the time when the listening period of each secondary channel arrives; that is, for different secondary channels, at the time when the respective listening periods arrive, the second wireless frame is sent on the secondary channels, respectively.

Optionally, there may be a time offset between the secondary channels. For example, if the station 101 performs a backoff operation on secondary channel 1, there will be a deviation in the sending time on secondary channel 2. In this case, the time of each secondary channel may use a TSF parameter between the secondary channel and the primary channel as a time reference.

In some embodiments, the sensing mode of the secondary channel includes a simultaneous sensing mode, and the listening period of each secondary channel is the same;
the sensing mode of the secondary channel includes a time-division sensing mode, and the listening periods of different secondary channels are different;
   or
the sensing mode of the secondary channel includes a time-division sensing mode, and at least two adjacent listening periods in a listening order have the same interval.

The sensing mode of the secondary channel includes the simultaneous sensing mode, and the listening period of each secondary channel is the same, that is, the starting time, the ending time and the duration of each listening period are all the same.

The sensing mode of the secondary channel includes the time-division sensing mode, and the listening periods of different secondary channels are different, so as to distinguish the listening periods of different secondary channels and avoid overlap between the listening periods of different secondary channels.

The sensing mode of the secondary channel includes the time-division sensing mode, the listening order of each secondary channel may be set, and adjacent listening periods may have the same time interval. For example, the listening period of secondary channel 1 is listening period 1, the listening period of secondary channel 2 is listening period 2, and the listening period of secondary channel 3 is listening period 3. The time interval between listening period 1 and listening period 2 is the same as the time interval between listening period 2 and listening period 3.

The time interval between adjacent listening periods may be the time interval between the ending time of a previous listening period and the starting time of a current listening period.

In some embodiments, the duration of the second wireless frame is less than or equal to a preset duration of an NAV of a primary channel.

Normally, a communication duration on the secondary channel does not exceed a communication time on the primary channel. Therefore, the duration of the second wireless frame is less than or equal to the preset duration of the NAV of the primary channel, so as to avoid communication interruption or other situations on the secondary channel due to that the communication on the secondary channel has not yet completed but the NAV of the primary channel is completed and the station 101 or the access point 102 re-accesses the primary channel.

In some embodiments the method further includes:
during or after an initial association procedure, negotiating listening period information of the secondary channel, in which the listening period information uses a time synchronization function (TSF) parameter of the primary channel as a time reference.

During the initial association procedure or after the initial association procedure, for example, negotiation is performed through a third wireless frame. The third wireless frame includes at least one of a beacon frame, a probe request frame, an association request frame or a newly defined wireless frame. For example, during the initial association procedure, the access point 102 and the situation 101 negotiate listening capability information of the access point 102 through at least one of the beacon frame, the probe response frame, or the association response frame; the newly defined wireless frame is a wireless frame sent after the initial association procedure, and after the initial association procedure, the listening period information of the access point 102 is negotiated through the newly defined wireless frame.

The listening period information uses the TSF parameter of the primary channel as the time reference, and the listening period information may be carried in the association response frame, for example, the listening period time finally executed is determined by the association response frame.

The communication method involved in the embodiments of the present disclosure may include at least one of the aforementioned steps and embodiments. For example, step 401 may be implemented as an independent embodiment, step 402 may be implemented as an independent embodiment, step 4021 may be implemented as an independent embodiment, and step 4022 may be implemented as an independent embodiment, a combination of step 401 and step 402 may be implemented as an independent embodiment, a combination of step 401 and step 4021 may be implemented as an independent embodiment, and a combination of step 401 and step 4022 may be implemented as an independent embodiment, but the present disclosure is not limited thereto.

In some embodiments, reference may be made to other alternative implementations described before or after the description corresponding to FIG. 4.

In some embodiments, the name of information or the like is not limited to the names described in embodiments. Terms such as "information", "message", "signal", "signaling", "report", "configuration", "indication", "instruction", "command", "channel", "parameter", "domain", "field", "symbol", "codepoint", "bit", "data", "program", and "chip" may be used interchangeably.

In some embodiments, terms such as "moment", "time point", "time", and "time position" may be interchangeable, and terms such as "duration", "time period", "time window", "window", and "time" may be interchangeable.

In some embodiments, terms such as wireless access scheme, waveform, etc. may be used interchangeably.

In some embodiments, terms such as "certain", "presdetermined, "default", "set", "indicated", "a certain", "any" and "first" may be used interchangeably. Terms such as "certain A", "predetermined A", "default A", "set A", "indicated A", "a certain A", "any A" and "first A" may be interpreted as A pre-defined in a protocol or the like, or as A obtained through setting, configuration, or indication, or as specific A, a certain A, any A, or first A, but the present disclosure is not limited thereto.

In some embodiments, determination or judgment may be performed by a value represented by 1 bit (0 or 1), by a true or false value (Boolean value) represented by true or false, or by comparison of numerical values (for example, comparison with a predetermined value), but the present disclosure is not limited thereto.

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

FIG. 5 is a schematic diagram of a communication method according to an embodiment of the present disclosure.

As shown in FIG. 5, the method may be applied in an access point 102, and the method includes the following.

At step 501, the access point determines a first wireless frame on a secondary channel, in which the first wireless frame is used to request a station to receive data on the secondary channel or to feed back buffer status information on the secondary channel.

At step 502, the first wireless frame is sent on the secondary channel at an arriving time of a listening period, in which the listening period is pre-negotiated with the station.

Optionally, in some embodiments of the present disclosure, step 502 includes the following.

At step 5021, the first wireless frame is sent on the secondary channel at the arriving time of the listening period as follows.

A sensing mode of the secondary channel includes a simultaneous sensing mode, and at the arriving time of the listening period, the first wireless frame is sent simultaneously on each secondary channel;
or
a sensing mode of the secondary channel includes a time-division sensing mode, and at an arriving time of a listening period of each of secondary channels, the first wireless frame is sent on the secondary channels, respectively.

Optionally, in some embodiments of the present disclosure, the duration of the first wireless frame is less than or equal to a preset duration of a network allocation vector (NAV) of a primary channel.

Optionally, in some embodiments of the present disclosure, during or after an initial association procedure, listening period information of the secondary channel is negotiated, in which the listening period information uses a time synchronization function (TSF) parameter of the primary channel as a time reference.

Optionally, in some embodiments of the present disclosure, the sensing mode of the secondary channel includes a simultaneous sensing mode, and the listening period of each secondary channel is the same;
the sensing mode of the secondary channel includes a time-division sensing mode, and the listening periods of different secondary channels are different;
   or
the sensing mode of the secondary channel includes a time-division sensing mode, and at least two adjacent listening periods in a listening order have the same interval.

The communication method involved in the embodiments of the present disclosure may include at least one of the aforementioned steps and embodiments. For example, step 501 may be implemented as an independent embodiment, step 502 may be implemented as an independent embodiment, step 5021 may be implemented as an independent embodiment, and step 5022 may be implemented as an independent embodiment, a combination of step 501 and step 502 may be implemented as an independent embodiment, a combination of step 501 and step 5021 may be implemented as an independent embodiment, and a combination of step 501 and step 5022 may be implemented as an independent embodiment, but the present disclosure is not limited thereto.

In some embodiments, reference may be made to other alternative implementations described before or after the description corresponding to FIG. 5.

FIG. 6 is a schematic diagram of a communication method according to an embodiment of the present disclosure.

As shown in FIG. 6, the method may be applied in a station 101, and the method includes the following.

At step 601, the station receives a first wireless frame on a secondary channel at an arriving time of a listening period.

The first wireless frame is used to request the station to receive data on the secondary channel or to feed back buffer status information on the secondary channel.

The listening period is pre-negotiated with the station.

Optionally, in some embodiments of the present disclosure, step 601 includes:
at step 6011, receiving the first wireless frame simultaneously on each secondary channel at the arriving time of the listening period, in which a sensing mode of the secondary channel includes a simultaneous sensing mode;
   or
at step 6012, receiving the first wireless frame on each secondary channel respectively at an arriving time of a listening period of each secondary channel, in which a sensing mode of the secondary channel includes a time-division sensing mode.

Optionally, in some embodiments of the present disclosure, the first wireless frame includes a request to send (RTS) frame or a buffer status report poll (BSRP) frame.

Optionally, in some embodiments of the present disclosure, a duration of the first wireless frame is less than or equal to a preset duration of a network allocation vector (NAV) of a primary channel.

Optionally, in some embodiments of the present disclosure, the method further includes:
during or after an initial association procedure, negotiating listening period information of the secondary channel, in which the listening period information uses a time synchronization function (TSF) parameter of a primary channel as a time reference.

Optionally, in some embodiments of the present disclosure, a sensing mode of the secondary channel comprises a simultaneous sensing mode, and each secondary channel has the same listening period;
a sensing mode of the secondary channel comprises a time-division sensing mode, and different secondary channels have different listening periods;
   or
a sensing mode of the secondary channel comprises a time-division sensing mode, and at least two adjacent sensing periods in a listening order have the same interval.

The communication method involved in the embodiments of the present disclosure may include at least one of the aforementioned steps and embodiments. For example, step 601 may be implemented as an independent embodiment, step 6011 may be implemented as an independent embodiment, and step 6012 may be implemented as an independent embodiment, but the present disclosure is not limited thereto.

In some embodiments, reference may be made to other alternative implementations described before or after the description corresponding to FIG. 6.

FIG. 7 is a schematic diagram of a communication method according to an embodiment of the present disclosure.

As shown in FIG. 7, the method may be applied in a station 101, and the method includes the following.

At step 701, the station determines a second wireless frame on a secondary channel, in which the second wireless frame is used to request an access point to receive data on the secondary channel.

At step 702, the second wireless frame is sent on the secondary channel at an arriving time of a listening period, in which the listening period is pre-negotiated with the access point.

Optionally, in some embodiments of the present disclosure, step 702 includes:
at step 7021, at the arriving time of the listening period, sending the second wireless frame simultaneously on each secondary channel, in which a sensing mode of the secondary channel includes a simultaneous sensing mode;
   or
at step 7022, at an arriving time of a listening period of each of secondary channels, sending the second wireless frame on the secondary channels respectively, in which a sensing mode of the secondary channel includes a time-division sensing mode.

Optionally, in some embodiments of the present disclosure, the second wireless frame includes a request to send (RTS) frame.

Optionally, in some embodiments of the present disclosure, the duration of the second wireless frame is less than or equal to a preset duration of a network allocation vector (NAV) of a primary channel.

Optionally, in some embodiments of the present disclosure, during or after an initial association procedure, listening period information of the secondary channel is negotiated, in which the listening period information uses a time synchronization function (TSF) parameter of the primary channel as a time reference.

Optionally, in some embodiments of the present disclosure, the sensing mode of the secondary channel includes a simultaneous sensing mode, and the listening period of each secondary channel is the same;
the sensing mode of the secondary channel includes a time-division sensing mode, and the listening periods of different secondary channels are different;
   or
the sensing mode of the secondary channel includes a time-division sensing mode, and at least two adjacent listening periods in a listening order have the same interval.

The communication method involved in the embodiments of the present disclosure may include at least one of the aforementioned steps and embodiments. For example, step 701 may be implemented as an independent embodiment, step 702 may be implemented as an independent embodiment, step 7021 may be implemented as an independent embodiment, and step 7022 may be implemented as an independent embodiment, a combination of step 701 and step 702 may be implemented as an independent embodiment, a combination of step 701 and step 7021 may be implemented as an independent embodiment, and a combination of step 701 and step 7022 may be implemented as an independent embodiment, but the present disclosure is not limited thereto.

In some embodiments, reference may be made to other alternative implementations described before or after the description corresponding to FIG. 7.

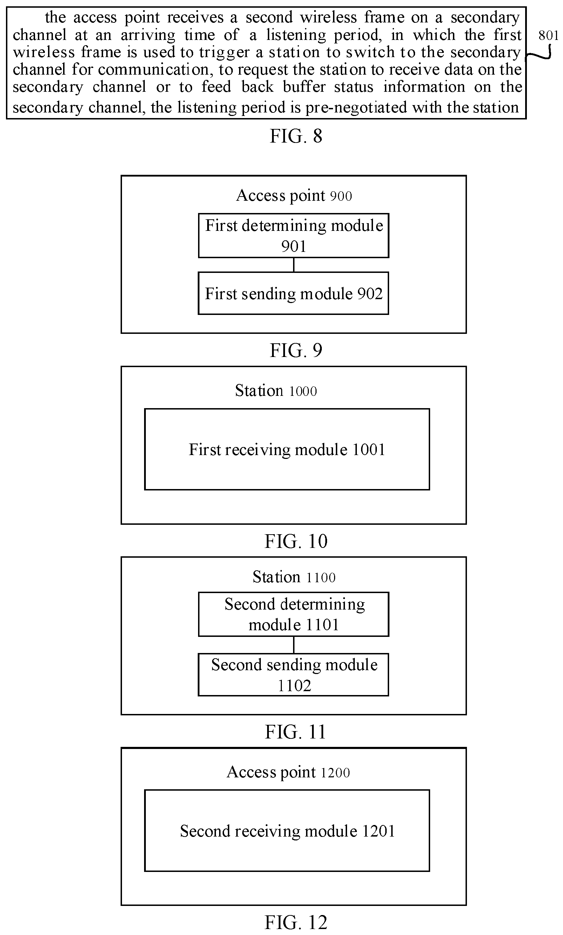

FIG. 8 is a schematic diagram of a communication method according to an embodiment of the present disclosure.

As shown in FIG. 8, the method may be applied in an access point, and the method includes the following.

At step 801, the access point receives a second wireless frame on a secondary channel at an arriving time of a listening period.

The second wireless frame is used to request the access point to receive data on the secondary channel.

The listening period is pre-negotiated with the station.

Optionally, in some embodiments of the present disclosure, step 801 includes:
at step 8011, at the arriving time of the listening period, receiving the second wireless frame simultaneously on each secondary channel, in which a sensing mode of the secondary channel includes a simultaneous sensing mode;
   or
at step 8012, at an arriving time of a listening period of each of secondary channels, receiving the second wireless frame respectively on the secondary channels, in which a sensing mode of the secondary channel includes a time-division sensing mode.

Optionally, in some embodiments of the present disclosure, the second wireless frame includes a request to send (RTS) frame.

Optionally, in some embodiments of the present disclosure, a duration of the second wireless frame is less than or equal to a preset duration of a network allocation vector (NAV) of a primary channel.

Optionally, in some embodiments of the present disclosure, during or after an initial association procedure, listening period information of the secondary channel is negotiated, in which the listening period information uses a time synchronization function (TSF) parameter of a primary channel as a time reference.

Optionally, in some embodiments of the present disclosure, a sensing mode of the secondary channel comprises a simultaneous sensing mode, and each secondary channel has the same listening period;
a sensing mode of the secondary channel comprises a time-division sensing mode, and different secondary channels have different listening periods;
   or
a sensing mode of the secondary channel comprises a time-division sensing mode, and at least two adjacent sensing periods in a listening order have the same interval.

The communication method involved in the embodiments of the present disclosure may include at least one of the aforementioned steps and embodiments. For example, step 801 may be implemented as an independent embodiment, step 8011 may be implemented as an independent embodiment, and step 8012 may be implemented as an independent embodiment, but the present disclosure is not limited thereto.

In some embodiments, reference may be made to other alternative implementations described before or after the description corresponding to FIG. 8.

The embodiments of the present disclosure also propose an apparatus for implementing any of the above methods, for example, an apparatus is proposed, the above apparatus includes units or modules for implementing various steps performed by the terminal in any of the above methods. For another example, another apparatus is proposed, including units or modules for implementing various steps performed by the network device (for example, an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus can be implemented in the form of hardware circuits, and the functions of some or all of the units or modules can be realized by designing the hardware circuits. The above hardware circuits can be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses can be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 9 is a schematic diagram of an access point proposed in an embodiment of the present disclosure. As shown in FIG. 9, the access point 900 may include at least one of a first determining module 901 or a first sending module 902.

In some embodiments, the first determining module 901 is configured to determine a first wireless frame on a secondary channel, in which the first wireless frame is used to request a station to receive data on the secondary channel or to feed back buffer status information on the secondary channel.

The first sending module 902 is configured to send the first wireless frame on the secondary channel at an arriving time of a listening period, in which the listening period is pre-negotiated with the station.

Optionally, the first determining module 901 is used to execute at least one of communication steps (such as step S301, step S501) performed by the access point 102 in any of the above methods, the first sending module 902 is used to execute at least one of step S302, step S3021, step S3022, step 502, step 5021, or step 5022, which will not be repeated here.

FIG. 10 is a schematic diagram of a station proposed in an embodiment of the present disclosure. As shown in FIG. 10, the station 1000 may include a first receiving module 1001.

In some embodiments, the first receiving module 1001 is configured to receive a first wireless frame on a secondary channel at an arriving time of a listening period.

In which the first wireless frame is used to request the station to receive data on the secondary channel or to feed back buffer status information on the secondary channel;
the listening period is pre-negotiated with the station.

Optionally, the first receiving module 1001 is used to execute at least one of communication steps (such as step S601, step S6011, step 6012, which is not limited herein) performed by the station 101 in any of the above methods, which will not be repeated here.

FIG. 11 is a schematic diagram of a station proposed in an embodiment of the present disclosure. As shown in FIG. 11, the station 1100 may include at least one of a second determining module 1101 or a second sending module 1102.

In some embodiments, the second determining module 1101 is configured to determine a second wireless frame on a secondary channel, in which the second wireless frame is used to request an access point to receive data on the secondary channel.

The second sending module 1102 is configured to send the first wireless frame on the secondary channel at an arriving time of a listening period, in which the listening period is pre-negotiated with the access point.

Optionally, the second determining module 1101 is used to execute at least one of communication steps (such as step S401, step S701, which is not limited herein) performed by the station 101 in any of the above methods, the second sending module 1102 is used to execute at least one of step S402, step S4021, step S4022, step 702, step 7021, or step 7022, which will not be repeated here.

FIG. 12 is a schematic diagram of an access point proposed in an embodiment of the present disclosure. As shown in FIG. 12, the access point 1200 may include a second receiving module 1201.

In some embodiments, the second receiving module 1201 is configured to receive a second wireless frame on a secondary channel at an arriving time of a listening period.

In which the second wireless frame is used to request the access point to receive data on the secondary channel;
the listening period is pre-negotiated with the station.

Optionally, the second receiving module 1201 is used to execute at least one of communication steps (such as step S801, step S8011, step 8012, which is not limited herein) performed by the access point 102 in any of the above methods, which will not be repeated here.

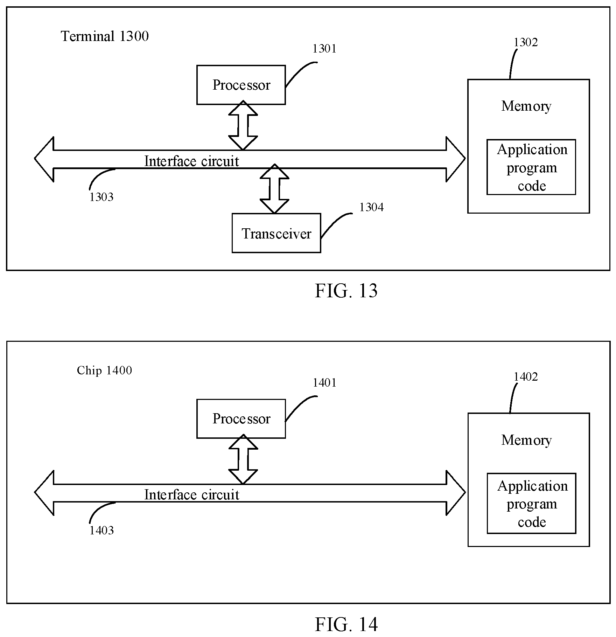

FIG. 13 is a schematic diagram of a terminal 1300 (e.g., user equipment, etc.) proposed in an embodiment of the present disclosure. The terminal 1300 may be a chip, a chip system, or a processor that supports a network device to implement any of the above methods, or a chip, a chip system, or a processor that supports a terminal to implement any of the above methods. The terminal 1300 may be used to implement the method described in the above method embodiments, and for details, reference may be made to the description in the above method embodiments.

As shown in FIG. 13, the terminal 1300 includes one or more processors 1301. The processor 1301 may be a general-purpose processor or a dedicated processor, for example, a baseband processor or a central processing unit. The baseband processor may be used to process a communication protocol and communication data, and the central processing unit may be used to control the communication apparatus (such as a base station, a baseband chip, a terminal, a terminal chip, a DU or a CU, etc.) to execute a program and process data of the program. The terminal 1300 performs any of the above methods.

In some embodiments, the terminal 1300 further includes one or more memories 1302 for storing instructions. Optionally, all or some of the memories 1302 may be located outside the terminal 1300.

In some embodiments, the terminal 1300 further includes one or more transceivers 1304. When the terminal 1300 includes one or more transceivers 1304, at least one of the communication steps (for example, step S302, step S3021, step S3022, step S402, step S4021, step S4022, step S502, step S5021, step S5022, step S601, step S6011, step S6012, step S702, step S7021, step S7022, step S801, step S8011, step S8012, which is not limited here) such as sending and/or receiving in the above methods is performed by the transceiver 1304, and at least one of the other steps (for example, step S301, step S401, step S501, step 701, which is not limited here) is performed by the processor 1301.

In some embodiments, the transceiver may include a receiver and a transmitter, and the receiver and/or the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

In some embodiments, the terminal 1300 further includes one or more interface circuits 1303, which are connected to the memory 1302. Optionally, the interface circuit 1303 may be used to receive signals from the memory 1302 or other apparatuses, and may be used to send signals to the memory 1302 or other apparatuses. For example, the interface circuit 1303 may read instructions stored in the memory 1302 and send the instructions to the processor 1301.

The terminal 1300 described in the above embodiments may be a communication device, such as UE, but the scope of the terminal 1300 described in the present disclosure is not limited thereto, and the structure of the terminal 1300 may not be limited by FIG. 13. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 14 is a schematic diagram of a chip 1400 proposed in an embodiment of the present disclosure. In case where the terminal 1300 may be a chip or a chip system, reference may be made to the schematic diagram of the chip 1400 shown in FIG. 14, but the present disclosure is not limited thereto.

The chip 1400 includes one or more processors 1401, and the chip 1400 is used to execute any of the above methods.

In some embodiments, the chip 1400 further includes one or more interface circuits 1403. Optionally, the interface circuit 1403 is connected to the memory 1402. Optionally, the interface circuit 1403 may be used to receive signals from the memory 1402 or other apparatuses, and the interface circuit 1403 may be used to send signals to the memory 1402 or other apparatuses. For example, the interface circuit 1403 may read instructions stored in the memory 1402 and send the instructions to the processor 1401.

In some embodiments, the interface circuit 1403 executes at least one of the communication steps (for example, step S302, step S3021, step S3022, step S402, step S4021, step S4022, step S502, step S5021, step S5022, step S601, step S6011, step S6012, step S702, step S7021, step S7022, step S801, step S8011, step S8012, which is not limited here) such as sending and/or receiving in the above methods, the processor 1401 executes at least one of the other steps (for example, step S301, step S401, step S501, step 701, which is not limited here).

In some embodiments, the terms such as "interface circuit", "interface", "transceiver pin", and "transceiver" may be exchangeable with each other.

In some embodiments, the chip 1400 further includes one or more memories 1402 for storing instructions. Optionally, all or part of the memory 1402 may be outside the chip 1400.

The present disclosure also proposes a storage medium having instructions stored thereon, and when the instructions are executed on the terminal 1300, the terminal 1300 performs any of the above methods. Optionally, the storage medium is an electronic storage medium. Optionally, the storage medium is a computer-readable storage medium, but the present disclosure is not limited to this, and the storage medium may also be a storage medium readable by other devices. Optionally, the storage medium may be a non-transitory storage medium, but the present disclosure is not limited to this, and storage medium may also be a temporary storage medium.

The present disclosure also proposes a program product which, when executed by the terminal 1300, enables the terminal 1300 to perform any of the above methods. Optionally, the program product is a computer program product.

The present disclosure also proposes a computer program which, when executed on a computer, causes the computer to perform any one of the above methods.

## Claims

1. A communication method, comprising:
determining, by an access point, a first wireless frame on a secondary channel, wherein the first wireless frame is used to request a station to receive data on the secondary channel or to feed back buffer status information on the secondary channel; and
sending the first wireless frame on the secondary channel at an arriving time of a listening period, wherein the listening period is pre-negotiated with the station.

2. The method of claim 1, wherein sending the first wireless frame on the secondary channel at the arriving time of the listening period comprises:
at the arriving time of the listening period, sending the first wireless frame simultaneously on each of secondary channels, wherein a sensing mode of the secondary channel comprises a simultaneous sensing mode;
or
at an arriving time of a listening period of each of secondary channels, sending the first wireless frame on the secondary channels, respectively, wherein a sensing mode of the secondary channel comprises a time-division sensing mode.

3. The method of claim 1 or 2, wherein the first wireless frame comprises a request to send (RTS) frame or a buffer status report poll (BSRP) frame.

4. The method of claim 1, wherein a duration of the first wireless frame is less than or equal to a preset duration of a network allocation vector (NAV) of a primary channel.

5. The method of claim 1, further comprising:
during or after an initial association procedure, negotiating listening period information of the secondary channel, wherein the listening period information uses a time synchronization function (TSF) parameter of a primary channel as a time reference.

6. The method of claim 1, wherein a sensing mode of the secondary channel comprises a simultaneous sensing mode, and each secondary channel has the same listening period;
a sensing mode of the secondary channel comprises a time-division sensing mode, and different secondary channels have different listening periods;
or
a sensing mode of the secondary channel comprises a time-division sensing mode, and at least two adjacent sensing periods in a listening order have the same interval.

7. A communication method, comprising:
receiving, by a station, a first wireless frame on a secondary channel at an arriving time of a listening period;
wherein the first wireless frame is used to request the station to receive data on the secondary channel or to feed back buffer status information on the secondary channel;
the listening period is pre-negotiated with the station.

8. The method of claim 7, wherein receiving the first wireless frame on the secondary channel at the arriving time of the listening period comprises:
at the arriving time of the listening period, receiving the first wireless frame simultaneously on each secondary channel, wherein a sensing mode of the secondary channel comprises a simultaneous sensing mode;
or
at an arriving time of a listening period of each of secondary channels, receiving the first wireless frame on the secondary channels, respectively, wherein a sensing mode of the secondary channel comprises a time-division sensing mode.

9. The method of claim 7 or 8, wherein the first wireless frame comprises a request to send (RTS) frame or a buffer status report poll (BSRP) frame.

10. The method of claim 7, wherein a duration of the first wireless frame is less than or equal to a preset duration of a network allocation vector (NAV) of a primary channel.

11. The method of claim 7, further comprising:
during or after an initial association procedure, negotiating listening period information of the secondary channel, wherein the listening period information uses a time synchronization function (TSF) parameter of a primary channel as a time reference.

12. The method of claim 7, wherein a sensing mode of the secondary channel comprises a simultaneous sensing mode, and each secondary channel has the same listening period;
a sensing mode of the secondary channel comprises a time-division sensing mode, and different secondary channels have different listening periods;
or
a sensing mode of the secondary channel comprises a time-division sensing mode, and at least two adjacent sensing periods in a listening order have the same interval.

13. A communication method, comprising:
determining, by a station, a second wireless frame on a secondary channel, wherein the second wireless frame is used to request an access point to receive data on the secondary channel; and
sending the second wireless frame on the secondary channel at an arriving time of a listening period, wherein the listening period is pre-negotiated with the access point.

14. The method of claim 13, wherein sending the second wireless frame on the secondary channel at the arriving time of the listening period comprises:
at the arriving time of the listening period, sending the second wireless frame simultaneously on each secondary channel, wherein a sensing mode of the secondary channel comprises a simultaneous sensing mode;
or
at an arriving time of a listening period of each of secondary channels, sending the second wireless frame on the secondary channels, respectively, wherein a sensing mode of the secondary channel comprises a time-division sensing mode.

15. The method of claim 13 or 14, wherein the second wireless frame comprises a request to send (RTS) frame.

16. The method of claim 13, wherein a duration of the second wireless frame is less than or equal to a preset duration of a network allocation vector (NAV) of a primary channel.

17. The method of claim 13, further comprising:
during or after an initial association procedure, negotiating listening period information of the secondary channel, wherein the listening period information uses a time synchronization function (TSF) parameter of a primary channel as a time reference.

18. The method of claim 13, wherein a sensing mode of the secondary channel comprises a simultaneous sensing mode, and each secondary channel has the same listening period;
a sensing mode of the secondary channel comprises a time-division sensing mode, and different secondary channels have different listening periods;
or
a sensing mode of the secondary channel comprises a time-division sensing mode, and at least two adjacent sensing periods in a listening order have the same interval.

19. A communication method, comprising:
receiving, by an access point, a second wireless frame on a secondary channel at an arriving time of a listening period;
wherein the second wireless frame is used to request the access point to receive data on the secondary channel;
the listening period is pre-negotiated with the station.

20. The method of claim 19, receiving the second wireless frame on the secondary channel at the arriving time of the listening period comprises:
at the arriving time of the listening period, receiving the second wireless frame simultaneously on each secondary channel, wherein a sensing mode of the secondary channel comprises a simultaneous sensing mode;
or
at an arriving time of a listening period of each of secondary channels, receiving the second wireless frame on the secondary channels, respectively, wherein a sensing mode of the secondary channel comprises a time-division sensing mode.

21. The method of claim 19 or 20, wherein the second wireless frame comprises a request to send (RTS) frame.

22. The method of claim 19, wherein a duration of the second wireless frame is less than or equal to a preset duration of a network allocation vector (NAV) of a primary channel.

23. The method of claim 19, further comprising:
during or after an initial association procedure, negotiating listening period information of the secondary channel, wherein the listening period information uses a time synchronization function (TSF) parameter of a primary channel as a time reference.

24. The method of claim 19, wherein a sensing mode of the secondary channel comprises a simultaneous sensing mode, and each secondary channel has the same listening period;
a sensing mode of the secondary channel comprises a time-division sensing mode, and different secondary channels have different listening periods;
or
a sensing mode of the secondary channel comprises a time-division sensing mode, and at least two adjacent sensing periods in a listening order have the same interval.

25. An access point, comprising:
a first determining module, configured to determine a first wireless frame on a secondary channel, wherein the first wireless frame is used to request a station to receive data on the secondary channel or to feed back buffer status information on the secondary channel; and
a first sending module, configured to send the first wireless frame on the secondary channel at an arriving time of a listening period, wherein the listening period is pre-negotiated with the station.

26. A station, comprising:
a first receiving module, configured to receive a first wireless frame on a secondary channel at an arriving time of a listening period;
wherein the first wireless frame is used to request the station to receive data on the secondary channel or to feed back buffer status information on the secondary channel;
the listening period is pre-negotiated with the station.

27. A station, comprising:
a second determining module, configured to determine a second wireless frame on a secondary channel, wherein the second wireless frame is used to request an access point to receive data on the secondary channel; and
a second sending module, configured to send the second wireless frame on the secondary channel at an arriving time of a listening period, wherein the listening period is pre-negotiated with the access point.

28. An access point, comprising:
a second receiving module, configured to receive a second wireless frame on a secondary channel at an arriving time of a listening period;
wherein the second wireless frame is used to request the access point to receive data on the secondary channel;
the listening period is pre-negotiated with the station.

29. A communication device, comprising:
one or more processors;
wherein the communication device is configured to perform the communication method of any one of claims 1 to 24.
